# EUROPÄISCHE PATENTSCHRIFT

(11) **EP 1 878 032 B1**
(45) Veröffentlichungstag und Bekanntmachung des Hinweises auf die Patenterteilung: **08.06.2011**
(21) Anmeldenummer: 06742243.6
(22) Anmeldetag: 13.04.2006
(51) Int. Cl.: H01G 2/10

(54) **Modul der Leistungselektronik umfassend einen Kondensator**
Power electronics module comprising a capacitor
Module d'électronique de puissance comprenant un condensateur

(30) Priorität: 02.05.2005 DE 102005020320; 05.07.2005 DE 102005031366; 05.07.2005 DE 102005031367
(43) Veröffentlichungstag der Anmeldung: 16.01.2008
(60) Teilanmeldung: 10185554.2
(73) Patentinhaber: EPCOS AG, 81669 München (DE)
(72) Erfinder: GRIMM, Wilhelm, 91154 Roth (DE); HÜBSCHER, Wilhelm, 89547 Heldenfingen (DE); VETTER, Harald, 89520 Heidenheim (DE)
(74) Vertreter: Epping - Hermann - Fischer
(86) Internationale Anmeldenummer: PCT/DE2006/000663
(87) Internationale Veröffentlichungsnummer: WO 2006/116961

(56) Entgegenhaltungen:
- EP-A- 0 598 256
- DE-A1- 2 157 690
- DE-A1- 19 845 821
- DE-C- 972 237

## Beschreibung

Die Erfindung betrifft ein Modul der Leistungselektronik.

Ein Kondensator ist bekannt aus der Druckschrift EP 0 598 256 B1. Des Weiteren sind aus den Druckschriften DE 972 237 C und DE 19845821 Module der Leistungselektronik bekannt.

Eine zu lösende Aufgabe besteht darin, ein Modul der Leistungselektronik anzugeben, das gegen Vibrationen geschützt ist.

Erfindungsgemäß wird diese Aufgabe durch den Gegenstand des Anspruchs 1 gelöst.

Es wird ein Modul der Leistungselektronik angegeben, das einen Leistungskondensator umfasst, der einen Kondensatorwickel und ein Gehäuse aufweist. Der Kondensatorwickel kann beispielsweise in einer MPM-Schichtwickeltechnik ausgeführt sein. Als Dielektrikum für den Schichtwickel kommt beispielsweise Polyester, PEN, PPS oder auch Polypropylene in Betracht. Es kommen auch Flachwickel und Rundwickel in Betracht.

In einer beispielhaften Ausführungsform kann ein Dielektrikum aus Polyester eine Dielektrizitätskonstante von 3,3 aufweisen. Ein Dielektrikum aus Polyester kann thermisch hoch stabil sein.

Es wird ein Leistungskondensator angeben, der zur Aufnahmen eines hohen elektrischen Stroms geeignet ist. Der maximale Strom kann vorzugsweise zwischen 50 und 300 Ampere betragen. Die Nennspannung des Leistungskondensators beträgt vorzugsweise zwischen 150 und 600 Volt.

In dem Gehäuse des Kondensators können eine oder auch mehrere Kondensatorwickel vorgesehen sein, die zur Kapazität des Kondensators beitragen. Beispielsweise können zwei Kondensatorwickel mit jeweils einer Kapazität von einem Millifarad übereinander gestapelt werden und mittels einer Parallelschaltung zu einer Nennkapazität C_{Nenn} = 2mF verschaltet werden. Die Kapazität kann aber auch andere Werte annehmen.

Die Filmdicke des im Schichtwickel enthaltenen Dielektrikums beträgt vorzugsweise einige Mikrometer, besonders bevorzugt circa 3 µm. Dadurch kann eine besonders große Kapazität bei geringem Platzbedarf und dennoch ausreichender Spannungsfestigkeit erreicht werden.

In einer besonderen Ausführungsform des Leistungskondensators ist ein Kondensatorwickel vorgesehen, der an zwei Seitenflächen mit einer Schoopschicht versehen ist. Dabei kann es sich vorzugsweise um eine flamm- oder lichtbogengespritzte metallische Schicht handeln, die vorzugsweise Zink oder einen Schichtaufbau, enthaltend eine Schicht mit Zink und eine weitere Schicht mit Zink sowie eine Schicht mit Kupfer enthält.

Durch eine geeignete Wahl der Geometrien von Kondensatorwickel, Schoopschicht und Gehäuse kann eine Kapazität zwischen den Kondensatorelementen und dem Gehäuse (auch Belag-Gehäuse-Kapazität) eingestellt werden, die zur Entstörung eines Umrichters geeignet und die allgemein günstige Eigenschaften hinsichtlich EMV (Elektromagnetische Verträglichkeit) aufweist.

In einer Ausführungsform des Leistungskondensators ist es vorgesehen, dass ein Wickel kontaktiert wird mittels zwei auf gegenüberliegenden Seiten des Schichtwickels angeordneten Kontaktschichten. Diese Kontaktschichten können beispielsweise Schoopschichten sein.

In einer Ausführungsform des Leistungskondensators sind in dem Kondensatorgehäuse mehrere Kondensatorwickel enthalten, wobei die jeweils an einem gemeinsamen äußeren Pol anzuschließenden Kontaktschichten der einzelnen Wickel auf der selben Seite des Leistungskondensators liegen.

Es wird darüber hinaus ein Leistungskondensator angegeben, bei dem ein Kondensatorgehäuse vorgesehen ist. Darüber hinaus ist im Inneren des Gehäuses wenigstens ein Kondensatorwickel vorgesehen. Zwischen einem Kondensatorwickel und dem Gehäuse ist ein mechanisch federndes Element vorgesehen. Mit Hilfe eines solchen federnden Elementes kann beispielsweise die Volumenausdehnung des Kondensatorwickels bei Erwärmen aufgefangen werden. Zum anderen hat ein solches federndes Element aber auch den Vorteil, dass Vibrationen, wie sie beispielsweise beim Betrieb eines Kraftfahrzeugs auftreten, gedämpft werden können.

In einer bevorzugten Ausführungsform des Kondensators sind auf zwei gegenüberliegenden Seiten eines Kondensatorwickels mechanisch federnde Elemente angeordnet, so dass die mechanische Fixierung des Kondensatorwickels besonders gut gelingt. Die federnden Elemente könne auch allseitig in einer Umfangsrichtung angeordnet sein.

Besonders bevorzugt wird als mechanisch federndes Element ein so genanntes "Spring Pad" verwendet. Ein Spring Pad wird vorzugsweise hergestellt aus einem Kunststoffschaum, wobei die einzelnen Poren des Schaums gasdichte, geschlossene Zellen bilden, die mit einem Gas, beispielsweise CO₂, gefüllt sind. Ein solchermaßen hergestelltes "Spring Pad" hat den Vorteil, dass es sehr unempfindlich ist gegenüber Materialermüdung. Die Federeigenschaften werden nicht in erster Linie durch Kompression und Dekompression von einem Festkörper sondern durch die geschlossenen Gasblasen und damit durch Kompression bzw. Dekompression eines Gasvolumens bewirkt. Solche federnden Elemente haben eine Lebensdauer von vielen Jahren, ohne dass sie ihre federnden Eigenschaften durch Alterung oder andere Prozesse verlieren.

Mit Hilfe eines oder mehrerer federnder Elemente zwischen Kondensatorwickel und Gehäuse kann eine lagefeste Positionierung des Kondensatorwickels im Gehäuse erreicht werden. Für den Fall, dass das Gehäuse ein elektrischer Leiter ist kann so für eine weitgehend konstante Kapazität zwischen einer Kontaktschicht eines Kondensatorwickels und dem Gehäuse und damit für eine konstante und relativ genau einstellbare Belag-Gehäuse-Kapazität gesorgt werden, was den Vorteil von sehr günstigen Eigenschaften hinsichtlich EMV bzw. was für die Entstörung eines Umrichters verwendet werden kann.

In einer besonders bevorzugten Ausführungsform des Kondensators ist es vorgesehen, dass das Gehäuse die Form einer Wanne hat, wobei die Wanne einen Boden und beispielsweise vier Seitenwände sowie ein offenes oberes Ende aufweist. An den Seitenflächen der Wanne können Montageösen bzw. Montageelemente vorgesehen sein, mit deren Hilfe der Leistungskondensator an ein weiteres elektronisches Element montiert werden kann. Auf der Oberseite des Gehäuses kann auch eine umlaufende Nut zur Aufnahme eines Dichtungsrings vorgesehen sein.

Zur Fixierung eines Kondensatorwickels im Gehäuse kann eine isolierende Schale vorgesehen sein, die - gewissermaßen als zweite Wanne - in den unteren Bereich des Gehäuses eingelegt wird. In die isolierende Wanne wird dann der Kondensatorwickel eingelegt. Zum isolierenden Abschluss des Kondensators zum offenen Ende des Gehäuses hin wird eine zweite isolierende Schale auf der Oberseite aufgelegt.

In einer bevorzugten Ausführungsform ergänzen sich die untere und die obere Schale zu einem weitgehend geschlossenen Gehäuse.

Gemäß einer besonderen Ausführungsform des Kondensators kann es vorgesehen sein, dass die obere Schale Öffnungen aufweist, durch die die äußeren Kontaktelemente, bzw. Paare von Kontaktelementen hindurch treten können. An den Öffnungen der oberen Schale können elektrisch isolierende Krägen angeordnet sein, die zur Isolierung der äußeren Kontaktelemente dienen.

In einer anderen Ausführungsform des Kondensators kann es vorgesehen sein, dass die untere Isolierschale eine Strukturierung oder Profilierung ihrer Außenseite bzw. auch eine Strukturierung oder eine Profilierung ihrer Innenseite aufweist, wodurch die Reibung zwischen der isolierenden Schale und einem mechanisch federnden Element erhöht werden kann. Dadurch kann die Positionsfestigkeit bzw. die Lagestabilität des mechanisch federnden Elementes (z. B. springpad) verbessert werden. Ein Verrutschen des Federelementes wird durch die Strukturierung oder Profilierung der Schale erschwert.

In einer besonders bevorzugten Ausführungsform des Kondensators ist auf der Oberseite eine Kühlfläche vorgesehen, die zum Kühlen des Kondensators dienen kann. Eine solche Kühlfläche kann besonders bevorzugt gebildet werden durch einen Blechstreifen bzw. eine Bandleitung. Eine solche Bandleitung kann z. B. aus zwei übereinanderliegenden, voneinander isolierten Blechstreifen gebildet sein, welche mit Aussenkontakten des Kondensators verbunden sind und zur Bestromung des Kondensatorwickels verwendet werden. Beispielsweise kann das Obere von zwei elektrisch leitenden Blechen als Kühlelement verwendet werden. Durch eine geeignete Ausbildung kann dafür Sorge getragen werden, dass das Obere der elektrisch leitenden Bleche hinreichend gut mit der oberen Kante des Gehäuses abschließt, womit für einen guten mechanischen Kontakt, bevorzugt für einen guten thermomechanischen Kontakt des oberen Blechs zu einem auf der Oberseite zu montierenden weiteren Gehäuse - das z. B. eine Kühlplatte bereitstellt - gesorgt werden kann.

Um die Gefahr eines Kurzschlusses zu reduzieren ist es vorteilhaft, wenn auf der Oberfläche des Kühlelementes noch eine elektrische Isolation angeordnet ist. Beispielsweise kann eine solche Isolation gebildet sein durch eine durchsichtige Isolierstofffolie, die beispielsweise nur wenige Mikrometer dick ist und somit den Wärmetransport nur unwesentlich behindert. In einer anderen Ausführungsform wird die elektrische Isolation durch die obere von zwei Isolierschalen gewährleistet, was im wesentlichen dadurch gelingt, dass die Wandstärke der Isolierschale ausreichend dünn gewählt wird. Die Wandstärke kann beispielsweise 0,3 mm betragen.

Es wird darüber hinaus ein elektrisches Modul beschrieben, wobei eine erste Einheit des Moduls ein elektronisches System betrifft, das z. B. IGBT-Module enthält. Allgemein kann die erste Einheit eine elektrische Vorrichtung für die Leistungselektronik sein. Eine weitere Einheit des Moduls ist der hier beschriebene Kondensator. Vorzugsweise ist die Oberseite des Kondensators bzw. des Gehäuses des Kondensators flächig verbunden mit der Unterseite der ersten Einheit. Die Außenkontakte des Kondensators ragen dabei in das Gehäuse der ersten Einheit und sind dort, beispielsweise mittels Verschraubung, mit den dort befindlichen IGBTs verbunden. Die erste Einheit muss nicht notwendigerweise IGBTs enthalten, sie kann auch andere elektronische Bauelemente oder auch mechanische Bauelemente enthalten.

Vorzugsweise ist die Unterseite der ersten Einheit, das heißt die Seite der ersten Einheit, die mit dem Kondensator in Kontakt steht, mit einer Vorrichtung zur Wärmeabführung ausgestattet. Eine solche Vorrichtung kann beispielsweise eine mit Löchern versehene Metallplatte sein. Eine solche Vorrichtung kann aber auch in Form von Kühlrippen ausgestaltet sein.

Vorzugsweise besteht ein guter flächiger Kontakt zwischen der oberen Stromschiene im Kondensator und der Kühlvorrichtung der ersten Einheit. Dadurch kann in vorteilhafter Weise im Kondensator entstehende Wärme gut nach außen abgeführt werden. In einer Ausführungsform des Kondensators wird die Oberseite des Kondensators gebildet durch eine dünne Isolierfolie, die nur einen geringen Wärmewiderstand hat und somit für einen guten Wärmetransport vom Kondensator zur ersten Einheit des elektronischen Moduls sorgt.

Die hier beschriebenen Gegenstände werden im folgenden anhand von Figuren näher erläutert.
- Figur 1: zeigt einen Kondenstor in einer perspektivischen Ansicht.
- Figur 2: zeigt beispielhaft die Konstruktion des Kondensators aus Figur 1.
- Figur 3: zeigt den oberen Teil einer Isolierschale als Konstruktionszeichnung.
- Figur 4: zeigt den unteren Teil einer Isolierschale als Konstruktionszeichnung.
- Figur: 5 zeigt ein elektrisches Modul in einem schematischen Querschnitt.

Die in den Figuren angegebenen Maßangaben sind lediglich beispielhaft zu verstehen. Sie schränken die hier beschriebenen Gegenstände nicht ein. Gleich Elemente oder Elemente mit der gleichen Funktion sind mit gleichen Bezugszeichen bezeichnet.

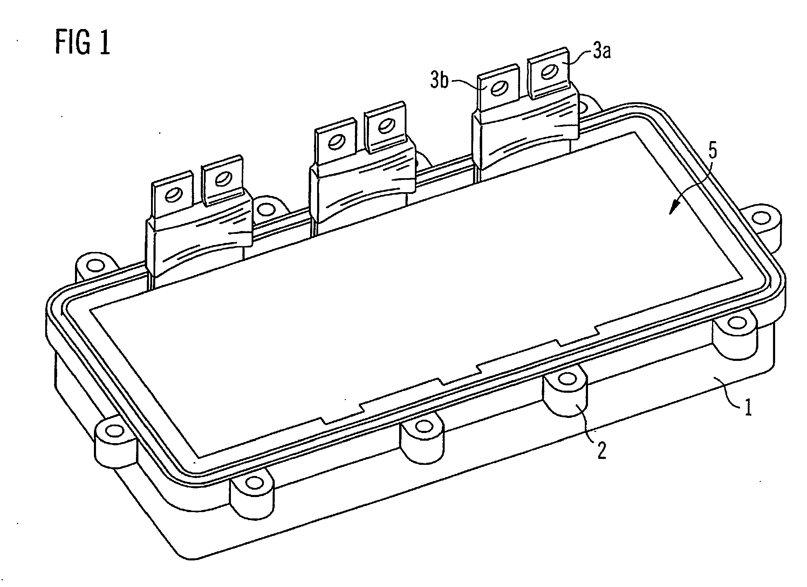

Figur 1 zeigt einen Kondensator mit einem Gehäuse 1, an dessen Oberseite in Umfangsrichtung mehrere Montageösen 2 angeordnet sind. Mit Hilfe der Montageösen 2 kann der Kondensator an eine weitere elektronische Einheit montiert werden. Eine solche Einheit ist beispielsweise in Figur 7 gezeigt.

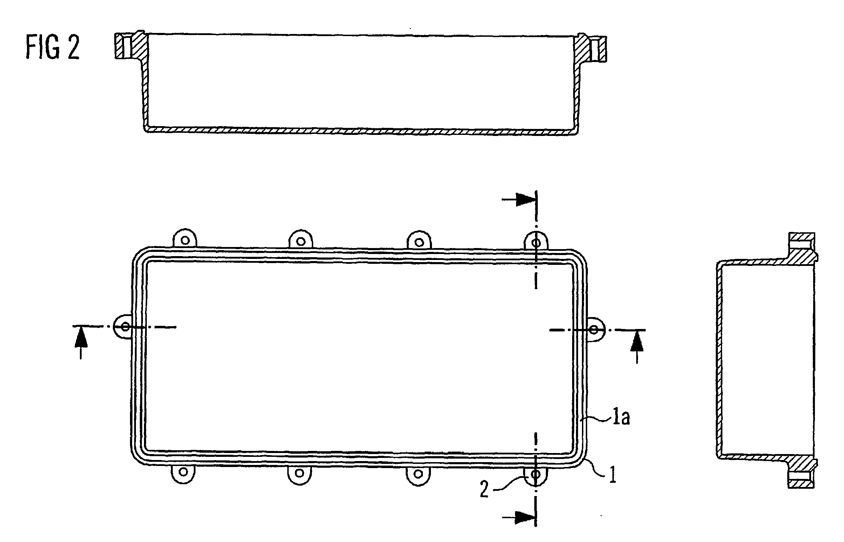

Figur 2 zeigt das Gehäuse als Konstruktionszeichnung. Das Gehäuse 1 kann beispielsweise aus Aluminium bestehen oder Aluminium enthalten. Die Länge des Gehäuses beträgt in etwa 25 cm. Die Breite des Gehäuses beträgt cirka 12 cm. Am Umfang des Gehäuses sind 10 Montageösen angeordnet. Die Anzahl der Montageösen kann aber variieren, je nachdem wie groß das Gehäuse ist und welche mechanische Stabilität für die Anbindung des Gehäuses an eine weitere elektronische Einheit gefordert wird. Die Tiefe des wannenförmigen Gehäuses beträgt etwa 6 cm. Auf der Oberseite des Gehäuses ist eine umlaufende Nut 1a angeordnet, die zur Aufnahme einer Dichtmasse beziehungsweise eines Dichtrings dient.

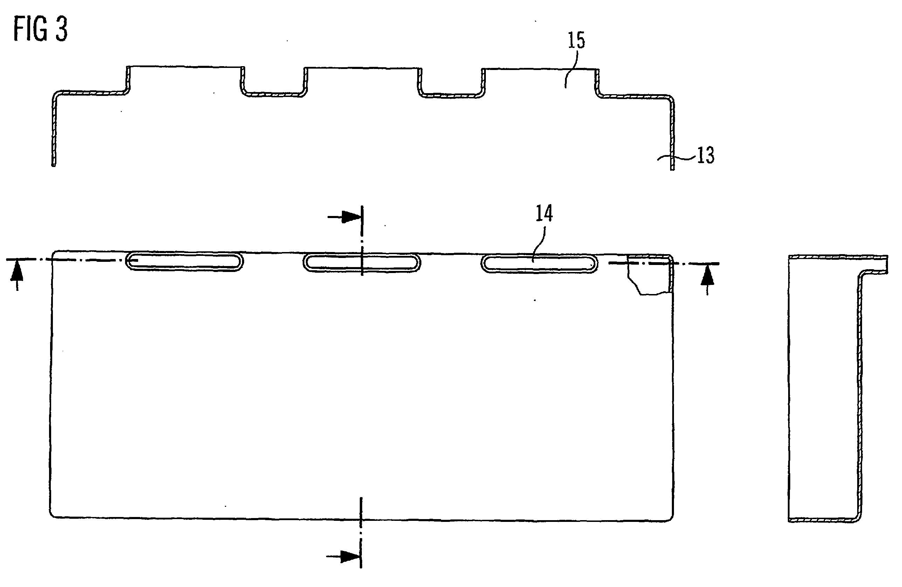

Die Figur 3 zeigt den oberen Teil einer isolierenden Schale, die zwischen dem oder den Kondensatorwickeln und dem Gehäuse des Kondensators angeordnet werden kann. Die Schale besteht vorzugsweise aus isolierendem Material, zum Beispiel Polycarbonat oder PP mit einer bevorzugten Dicke von 0,3 bis 0,5 mm. Die obere Halbschale 13 ist so geformt, dass sie quasi als Deckel über den Kondensatorwickel gelegt werden kann. Sie ist mit Langlöchern 14 versehen, durch die die Außenkontakte der Stromzuführungselemente hindurchragen können. Im Bereich der Löcher 14 können bevorzugt Kragen 15 angeordnet sein, die den unteren Bereich der Außenanschlüsse isolieren.

Die Wandstärke der oberen Halbschale 15 sollte zumindest im oberen (Deckel-)Bereich relativ dünn sein, um eine gute Kühlung von der Oberseite des Kondensators her zu gewährleisten.

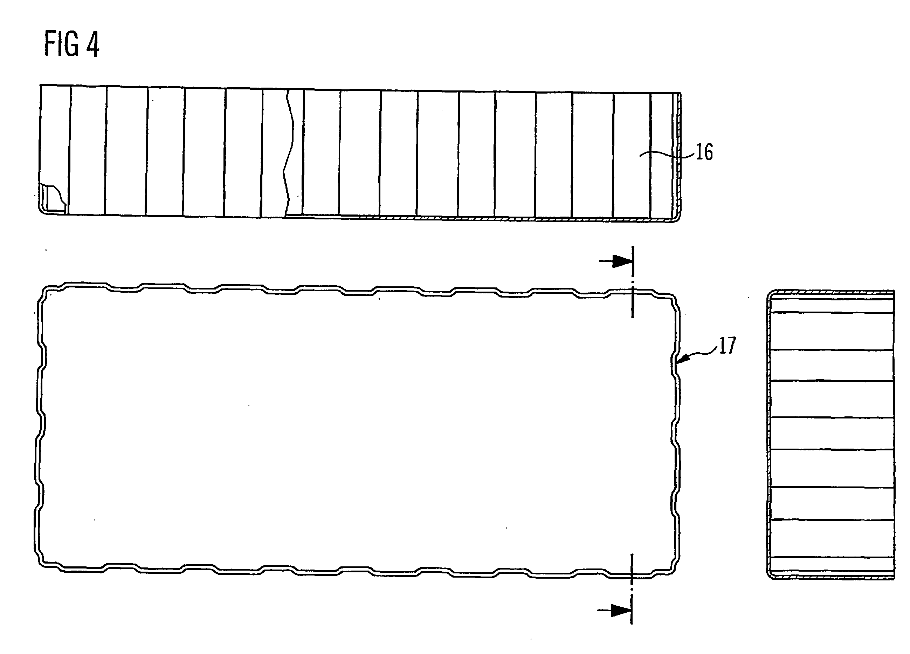

Figur 4 zeigt eine untere Halbschale 16, die vorzugsweise vor dem Einlegen der Kondensatorwickel in das Gehäuse eingelegt wird. Sie ist wie die obere Halbschale 13 vorzugsweise aus isolierendem Material gefertigt.

Die untere Halbschale ist mit einer Oberflächenprofilierung 17 ausgestattet, die in Figur 4 dargestellt ist. Die Oberflächenprofilierung kann sich sowohl auf die Außenseite als auch auf die Innenseite der isolierenden Schale beziehen.

Die Oberflächenprofilierung hat den Vorteil, dass ein mechanisch federndes Element, das gegen die untere Halbschale und mithin gegen die Oberflächenstruktur drückt, aufgrund der erhöhten Reibung nicht so leicht verrutschen kann. Ein Verrutschen des Federelements kann dadurch gehemmt werden. Dabei kann das Federelement sowohl an der Außenwand der Schale 16 als auch an der Innenwand der Schale 16 liegen.

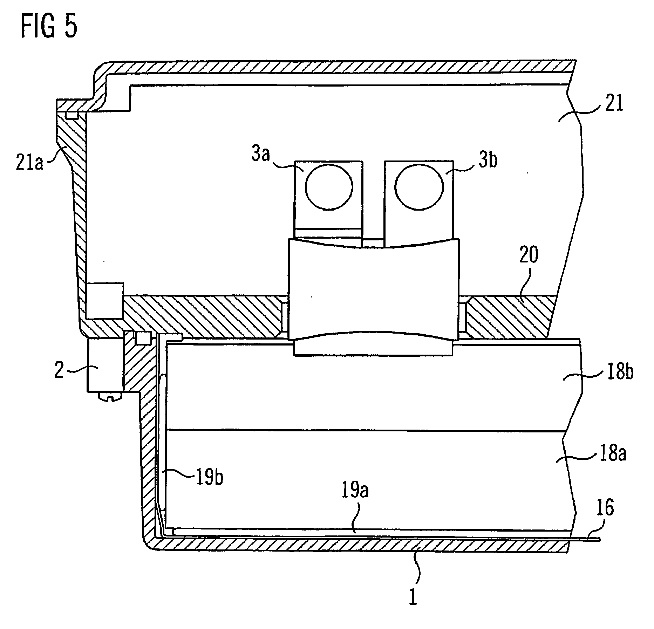

Figur 5 zeigt einen Kondensator als Bestandteil einer elektronischen Einheit, die beispielsweise ein Umrichter sein kann. Die elektronische Einheit 21 enthält dabei in einem Gehäuse 21a mehrere IGBT-Module. Auf der Unterseite des Gehäuses 21a ist ein Kondensator angeordnet, der beispielsweise durch Verschrauben mittels der Montageösen 2 an dem Gehäuse 21a befestigt ist.

Durch Löcher im Gehäuse 21a ragen die Außenanschlüsse 3a beziehungsweise 3b in das Innere der elektronischen Einheit 21. An der Unterseite des Gehäuses 21a ist eine Kühlplatte 20 vorgesehen, die zum Abtransport von Wärme geeignet ist. Die Unterseite der Kühlplatte 20 steht dabei in direktem thermischen Kontakt mit den Elementen des Kondensators, insbesondere mit der den oberen Abschluss des Kondensators bildenden Oberseite der oberen Halbschale gemäß Figur 5. Die Oberseite des Kondensators kann aber auch gebildet werden durch eine durchsichtige isolierende Folie gemäß Figur 1, insbesondere für den Fall, dass im Kondensator keine isolierenden Halbschalen angeordnet sind, sondern dass die Kondensatorwickel durch einen Verguss in dem Gehäuse des Kondensators gehalten werden.

In Figur 5 wird die Kapazität des Kondensators im wesentlichen gebildet durch zwei Kondensatorwickel 18a, 18b, die übereinander in das Gehäuse eingelegt sind. Zwischen den Kondensatorwickeln und dem Gehäuse 1 des Kondensators ist noch eine isolierende Halbschale 16 in Form einer unteren Halbschale angeordnet. Zwischen der unteren Halbschale 16 und den Kondensatorwickeln sind Federelemente angebracht. Bodenseitig ist dabei das Federelement 19a angebracht und wandseitig das Federelement 19b. In einer besonders bevorzugten Ausführungsform des Kondensators sind die Federelemente allseitig angebracht.

Durch die Federelemente können die Kondensatorwickel vibrationsarm im Gehäuse gehalten werden. Das bodenseitige Federelement 19a erfüllt dabei noch eine andere Funktion. Indem es die Kondensatorwickel 18a, 18b und die darüber befindlichen Elemente nach oben drückt, kann für einen verbesserten Wärmekontakt der Kühlplatte 20 mit den den oberen Abschluss des Kondensators bildenden Elementen gesorgt werden. Dadurch wird die Abfuhr von Verlustwärme des Kondensators verbessert.

### Bezugszeichenliste

- 1: Gehäuse
- 1a: Vertiefung
- 2: Montageöse
- 3a: Außenanschluss der ersten Polarität
- 3b: Außenanschluss der zweiten Polarität
- 4a, 4b: Kontaktlöcher
- 5: Isolierfolie
- 13: Obere Halbschale
- 14: Langloch
- 15: Kragen
- 16: untere Halbschale
- 17: Oberflächenprofilierung
- 18a, 18b: Kondensatorwickel
- 19a, 19b: Federelement
- 20: Kühlplatte
- 21: Elektrische Einheit
- 21a: Gehäuse

## Patentansprüche

1. Modul der Leistungselektronik,
- mit einem Kondensator, umfassend ein wannenförmiges Gehäuse (1) mit wenigstens einem Kondensatorwickel (18a, 18b)
- mit einem am Boden des wannenförmigen Gehäuses angeordneten mechanischen Federelement (19a, 19b), das als Spring Pad ausgebildet ist, welches einen Kunststoffschaum umfasst,
- und mit einer elektrischen Einheit (21), an deren Bodenbereich der Kondensator montiert ist, wobei das Federelement (19a, 19b) einen Kondensatorwickel (18a, 18b) an den Boden der elektrischen Einheit (21) andrückt.

2. Modul nach Anspruch 1,
bei dem am Boden der elektrischen Einheit (21) eine Kühlplatte vorgesehen ist, die in Wärmekontakt mit einer Kühlfläche des Kondensators steht, die durch eine Stromschiene gebildet ist.

3. Modul nach Anspruch 2,
wobei auf der der elektrischen Einheit (21) zugewandten Seite der Kühlfläche eine elektrische Isolierfolie (5) angeordnet ist.

4. Modul nach einem der Ansprüche 1 bis 3,
das IGBTs enthält.

## Claims

1. Power electronics module
- having a capacitor comprising a trough-like housing (1) with at least one capacitor winding (18a, 18b),
- having a mechanical spring element (19a, 19b) which is arranged on the base of the trough-like housing and is in the form of a spring pad which comprises a plastic foam,
- and having an electrical unit (21), the capacitor being mounted on the base region of this electrical unit, and the spring element (19a, 19b) pressing a capacitor winding (18a, 18b) against the base of the electrical unit (21).

2. Module according to Claim 1
in which a cooling plate is provided on the base of the electrical unit (21), the said cooling plate being in thermal contact with a cooling face of the capacitor, which cooling face is formed by a busbar.

3. Module according to Claim 2,
with an electrical insulating film (5) being arranged on that side of the cooling face which faces the electrical unit (21).

4. Module according to one of Claims 1 to 3,
which contains IGBTs.

## Revendications

1. Module d'électronique de puissance,
- comprenant un condensateur ayant un boîtier en forme de plateau (1) muni d'au moins un enroulement de condensateur (18a, 18b),
- comprenant un élément à ressort mécanique (19a, 19b) disposé au fond du boîtier en forme de plateau qui est réalisé sous la forme d'un appui de ressort comprenant une mousse plastique,
- et comprenant une unité électrique (21) dans la région du fond de laquelle est monté le condensateur, l'élément à ressort (19a, 19b) comprimant un enroulement de condensateur (18a, 18b) au fond de l'unité électrique (21).

2. Module selon la revendication 1, dans lequel une plaque de refroidissement est prévue au fond de l'unité électrique (21), laquelle plaque de refroidissement est en contact thermique avec une surface froide du condensateur qui est constituée par une barre conductrice.

3. Module selon la revendication 2, dans lequel une feuille électriquement isolante (5) est disposée sur la face de la surface froide qui est tournée vers l'unité électrique (21).

4. Module selon l'une des revendications 1 à 3, **caractérisé en ce qu'**il contient des transistors IGBT.
